# EUROPÄISCHE PATENTSCHRIFT

(11) **EP 3 510 481 B1**
(45) Veröffentlichungstag und Bekanntmachung des Hinweises auf die Patenterteilung: **30.09.2026**
(21) Anmeldenummer: 17761074.8
(22) Anmeldetag: 31.08.2017
(51) Int. Cl.: G06F 3/0489, G06F 3/0482, G06F 3/0488

(54) **SMART TOUCH**
SMART TOUCH
CONTACT TACTILE INTELLIGENT

(30) Priorität: 08.09.2016 DE 102016010920
(43) Veröffentlichungstag der Anmeldung: 17.07.2019
(73) Patentinhaber: FM Marketing GmbH, 5202 Neumarkt am Wallersee (AT)
(72) Erfinder: MAIER, Ferdinand, 5202 Neumarkt am Wallersee (AT)
(74) Vertreter: von Bülow & Tamada
(86) Internationale Anmeldenummer: PCT/EP2017/071907
(87) Internationale Veröffentlichungsnummer: WO 2018/046389

(56) Entgegenhaltungen:
- WO-A1-2009/038259
- US-A1- 2015 007 232
- US-A1- 2015 074 721
- US-A1- 2015 378 598

## Beschreibung

Die vorliegende Erfindung betrifft ein Verfahren zum Steuern eines auf einem Bildschirm angezeigten Menüs.

Ein Verfahren zum Steuern eines auf einem Bildschirm angezeigten Menüs ist beispielsweise aus der DE 10 2013 012 474 A1 bekannt. Das dortige Menü besteht aus einer Anzahl zu einem Raster angeordneten Menüelementen und wird direkt über dem das Menü anzeigenden Touchscreen als Eingabeschnittstelle gesteuert.

Die Druckschrift US 2015/378598 A1 offenbart Verfahren zum Steuern eines auf einem Touchscreen angezeigten Menüs mit einer Anzahl zu einem Raster angeordneten Menüelementen mit einer Eingabeschnittstelle, die das Touchscreen mit einer Anzahl zu dem Raster angeordneten haptisch erfassbaren Segmenten enthält, umfassend Empfangen eines Positionssignals, das von der Position eines Fingers eines Benutzers auf dem Touchscreen abhängig ist, Hervorheben des Menüelementes, das dem haptisch erfassbaren Menüelement zugeordnet ist, welches sich an der Position des Fingers befindet, und Empfangen eines Auslösesignals, wenn die Drucktaste (24) betätigt (46) wird und Auslösen einer dem hervorgehobenen (44) Menüelement (16) zugeordneten Funktion.

Die Druckschrift US 2015/007232 offenbart ein Fernsteuerungssystem. Die Fernbedienung verfügt über Tasten, die in einem Rastermuster angeordnet sind, das den vom Benutzer auswählbaren Optionen entspricht. Jede Taste ist einer dieser Optionen zugeordnet. Die empfangenen Funksignale veranlassen die Fernbedienung, die entsprechende Option auszuwählen, sobald die entsprechende Taste gedrückt wird.

Es ist Aufgabe der Erfindung die Menüsteuerung zu verbessern.

Als Erfindung wird ein Verfahren zum Steuern eines auf einem Bildschirm angezeigten Menüs mit einer Anzahl zu einem Raster angeordneten Menüelementen mit einer Eingabeschnittstelle vorgeschlagen, die eine Drucktaste mit einer Anzahl zu dem Raster angeordneten haptisch erfassbaren Segmenten enthält, wobei die Anzahl der Menüelemente der Anzahl der haptisch erfassbaren Segmente entspricht, so dass jedem Menüelement des Menüs ein haptisch erfassbares Segment auf der Drucktaste zugeordnet ist. Das erfindungsgemäße Verfahren umfasst die Schritte Empfangen eines Positionssignals, das von der Position eines Fingers eines Benutzers auf der Drucktaste abhängig ist, Hervorheben des Menüelementes, das dem haptisch erfassbaren Menüelement zugeordnet ist, welches sich an der Position des Fingers befindet, und Auslösen einer dem hervorgehobenen Menüelement zugeordneten Funktion, wenn die Drucktaste betätigt wird.

Dem angegebenen Verfahren liegt die Motivation zugrunde, raster- oder kachelförmige Menüsteuerungen, wie sie von Smartphones oder aus dem eingangs genannten Verfahren bekannt sind, auch auf Fernbedienungen zur Steuerung eines Fernsehgerätes zu verwenden. Diese grundsätzlich sehr benutzerfreundlichen Menüs würden bei der Steuerung eines Fernsehgerätes mit einer Fernbedienung das zeitaufwändige Anfahren eines Menüpunktes mittels eines Cursorelementes, wie einem Steuerkreuz, überflüssig machen, was gerade bei Menüs mit einer hohen Anzahl an Rastern über die Zeit sehr frustrierend ausfallen kann.

Herkömmliche raster- oder kachelförmige Menüs können jedoch nur über einen Touchscreen gesteuert werden, weil der Benutzer zur Koordinierung der Menüeingabe unmittelbaren Sichtkontakt sowohl zum Menü selbst als auch zu seinem Finger benötigt. Eine Verwendung der raster- oder kachelförmigen Menüs auf Fernbedienungen, die nicht über einen Touchscreen verfügen, ist daher nicht möglich. Selbst wenn eine Fernbedienung über einen Touchscreen verfügt, benötigt der Benutzer weiter gleichzeitigen Sichtkontakt zum Touchscreen und zu seinem Finger, denn sonst kann er nicht zielgerichtet Menüpunkte auswählen.

Zwar könnte der Benutzer die einzelnen Menüpunkte auswendig lernen. Unabhängig davon ob der Benutzer hierzu überhaupt die kognitiven Voraussetzungen mitbringt, gestaltet sich das gerade bei unterverzweigten Menüs mit Menüelementen, die als Funktion das Öffnen eines Untermenüs umfassen, sehr schwierig. Denn dann müsste sich der Benutzer nicht nur das Hauptmenü und die einzelnen Untermenüs an sich merken, er müsste zusätzlich auch immer wissen, in welchem Untermenü er sich gerade befindet, wenn er keinen Sichtkontakt zur Fernbedienung mit dem Touchscreen hat.

Hier greift die Erfindung mit dem Vorschlag an, die Eingabeschnittstelle wie bei einem Smartphone weiterhin mit einem berührungsempfindlichen Sensor auszugestalten. Anders als beim Smartphone wird der berührungsempfindliche Sensor jedoch als Drucktaste mit einem haptisch erfassbaren Raster ausgebildet, das dem raster- oder kachelförmigen Menü entspricht. Auf diese Weise lässt sich durch die Berührungsempfindlichkeit der Drucktaste stets auf dem das Menü anzeigenden Bildschirm wiedergeben, wo sich der Finger des Benutzers befindet, ohne dass der Benutzer mit der Drucktaste visuell interagieren muss. Er braucht das Raster auf der Drucktaste nun nur noch zu erfühlen und kann dann über den visuellen Kontakt zum Bildschirm das Menü wie bei einem Smartphone bequem steuern. Die Drucktaste kann daher dem Prinzip eines Touchpads, aber auch dem Prinzip eines Touchscreens nach ausgeführt sein. Beides würde die Erfindung erlauben. In keinem Fall muss der Benutzer zum Bedienen der Drucktaste und dem Raster darauf auf die Drucktaste blicken.

Mit dem angegebenen Verfahren lässt sich ein Bildschirm über eine Fernbedienung daher in einer sehr benutzerfreundlichen Weise steuern.

In einer Weiterbildung des angegebenen Verfahrens wird zum Hervorheben des Menüelementes das entsprechende Menüelement vergrößert dargestellt. Auf diese Weise kann das Menü auch noch über große Distanzen zwischen Benutzer und Bildschirm sicher und benutzerfreundlich gesteuert werden.

In einer zusätzlichen Weiterbildung des angegebenen Verfahrens werden dem vergrößerten Menüelement Hintergrundinformation zur dem Menüelement zugeordneten Funktion angezeigt. Die Hintergrundinformationen können beliebig ausgeführt sein, sollten dem Benutzer jedoch als eine Art Wegweiser dienen, sich im Menü zurechtzufinden, um ein sogenanntes Precognition zu ermöglichen. Die Hintergrundinformationen umfassen daher bevorzugt entweder sich anschließende Interaktionsmöglichkeiten mit dem Menü und/oder miniaturisierte Medieninhalte. Dies hat den Vorteil, dass sich der Benutzer nicht die einzelnen dem Menüelement zugeordneten Funktionen merken muss. Er kann Sie problemlos bei der Steuerung des Menüs erfassen. Dies erleichtert spürbar das Erlernen des Umgangs mit einem neuen Fernsehgerät und seiner Fernbedienung, weil der Benutzer nun während der Steuerung selbst die Bedienung und den Funktionsumfang des Systems erlernen kann. Ein Studium der Bedienungsanleitung vorab ist nun überhaupt nicht mehr notwendig. Auf diese Weise wird die Benutzerfreundlichkeit weiter gesteigert.

In einer besonderen Weiterbildung des angegebenen Verfahrens umfassen zumindest einige Menüelemente des Menüs und deren zugeordnete Funktion sowie die entsprechenden Hintergrundinformation die Wiedergabe eines vorbestimmten Medieninhaltes. Die Wiedergabe eines Medieninhaltes in dem vergrößert dargestellten Menüelement lässt sich mit vergleichsweise wenig Rechenressourcen und daher sehr schnell durchführen. Der Benutzer bekommt auf diese Weise schnell und zuverlässig eine Idee, was sich hinter dem Medieninhalt verbirgt und kann sich zielgerichteter bei der Auswahl eines Menüpunktes entscheiden. Dies verbessert die Benutzerfreundlichkeit weiter.

In einer anderen Weiterbildung des angegebenen Verfahrens ist die Eingabeschnittstelle eine Fernbedienung, wobei das Positionssignal drahtlos von der Fernbedienung empfangen wird.

Gemäß einem weiteren Aspekt der Erfindung ist eine Steuervorrichtung eingerichtet eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte des angegebenen Verfahrens durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, des angegebenen Verfahrens durchführt.

Gemäß einem weiteren Aspekt der Erfindung umfasst eine Wiedergabeeinrichtung einen Bildschirm zur Anzeige eines Menüs aus einer Anzahl zu einem Raster angeordneten Menüelementen und eine der zuvor angegebenen Steuervorrichtungen.

Gemäß einem weiteren Aspekt der Erfindung umfasst eine Fernbedienung eine Drucktaste mit einer Anzahl zu einem Raster angeordneten haptisch erfassbaren Segmenten, einen Positionssensor zur Erfassung einer Position eines Fingers eines Benutzers auf dem Raster, und eine Sendeschnittstelle zum Versenden eines Positionssignals, das von der Position eines Fingers eines Benutzers auf der Drucktaste abhängig ist sowie eines Auslösesignals, wenn die Drucktaste durch den Benutzer gedrückt wird.

Gemäß einem weiteren Aspekt der Erfindung umfasst ein Multimediasystem aus eines der angegebenen Wiedergabeeinrichtungen und die zuvor angegebene Fernbedienung.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Darstellung eines Multimediasystems mit einer Wiedergabeeinrichtung und einer Fernbedienung;
Fig. 2 ein Menü auf einem Bildschirm des Multimediasystems der Fig. 1,
Fig. 3 ein Untermenü zu dem Menü der Fig. 2 in einem ersten Funktionszustand,
Fig. 4 das Untermenü der Fig. 3 in einem zweiten Funktionszustand,
Fig. 5 das Untermenü der Fig. 3 in einem alternativen zweiten Funktionszustand, und
Fig. 6 ein alternatives Untermenü zu dem Menü der Fig. 2.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

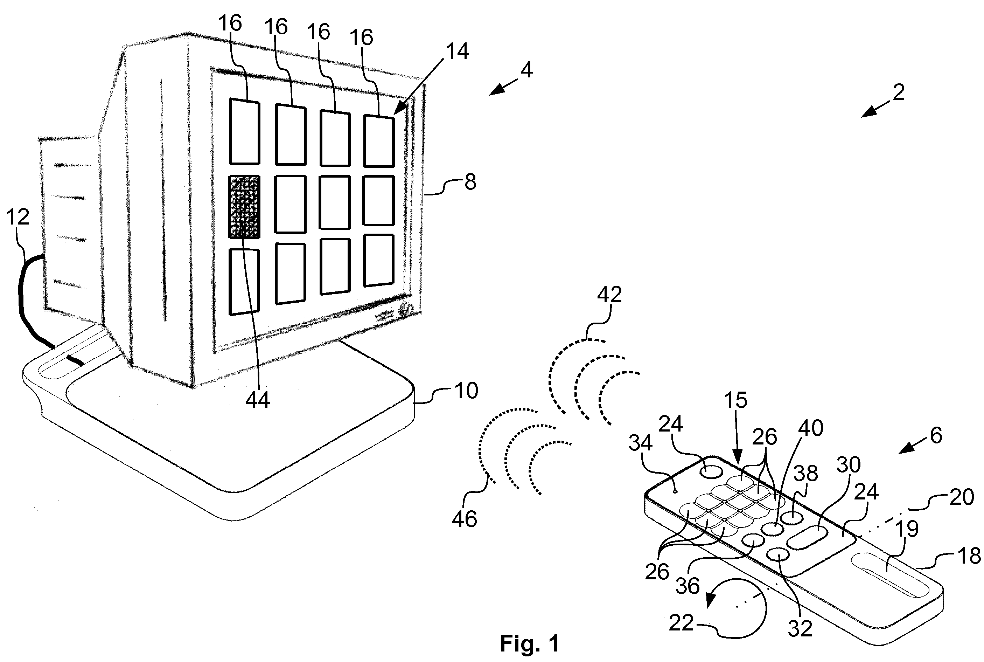

Es wird auf Fig. 1 Bezug genommen, die eine schematische Darstellung eines Multimediasystems 2 mit einer Wiedergabeeinrichtung 4 und einer Eingabeschnittstelle in Form einer Fernbedienung 6 zeigt. Das Multimediasystem 2 ist eingerichtet, noch näher zu beschreibende Medieninhalte auf einem Bildschirm 8 der Wiedergabeeinrichtung 4 wiederzugeben. Die Bildsignale, die zur Darstellung der Medieninhalte auf dem Bildschirm 8 notwendig sind, werden in einer Steuervorrichtung in Form einer Set Top Box 10 in an sich bekannter Weise generiert und über ein Datenkabel 12 an den Bildschirm 8 in an sich bekannter Weise übertragen. Hierauf soll der Kürze halber nicht eingegangen werden.

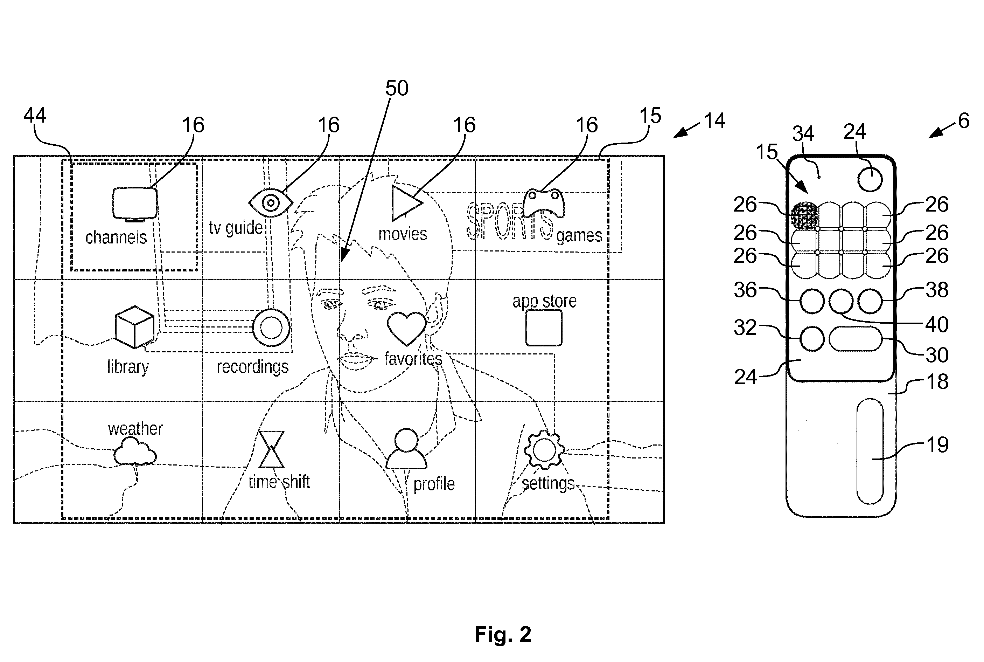

Ein Beispiel für einen auf dem Bildschirm 8 dargestellten Medieninhalt ist ein in Fig. 1 auf dem Bildschirm 8 angedeutetes Menü 14. Das Menü 14 umfasst eine Anzahl von zwölf Menüelementen 16, die in einem in Fig. 2 referenzierten Raster 15 angeordnet sind. Von diesen Menüelementen 16 sind in Fig. 1 der Übersichtlichkeit halber nicht alle mit einem eigenen Bezugszeichen versehen.

Mit dem Menü 14 lässt sich die Funktion der Set Top Box 10 und die Wiedergabe anderer Medieninhalte über die Fernbedienung 6 steuern. Bevor auf diese Steuerung näher eingegangen wird, soll zunächst der Aufbau der Fernbedienung 6 näher erläutert werden.

Die Fernbedienung 6 umfasst ein metallisches Gehäuse 18 mit einer Durchgangsöffnung 19 unter anderem zur Gewichtsreduktion. In dem Gehäuse 18 ist eine Drucktaste 24 aus einem Kunststoff gehalten, die um eine Achse 20 in und entgegen einer Drehrichtung 22 schwenkbar ist. Auf dieser Drucktaste 24 ist eine Anzahl von zwölf haptisch erfassbaren Segmenten in Form von Mulden 26 zu dem gleichen Raster 15 angeordnet, wie das Raster 15 des Menüs 14 auf dem Bildschirm 8. Jeder der Mulden 26 auf der Fernbedienung 6 ist ein Menüelement 16 des Menüs zugeordnet.

Die Fernbedienung 6 umfasst ferner Tasten, die die Drucktaste 24 durchstoßen und unabhängig von dieser drückbar sind. Hierzu gehört eine Ein-/Austaste 28, um das gesamte Multimediasystem 4 oder nur ein Teil davon zu aktivieren oder in einen Ruhezustand zu versetzen, eine Lautstärkewipptaste 30 zur Steuerung einer Lautstärke der Medienwiedergabe und eine Spracherkennungsaktivierungstaste 32, mit der eine Steuerung des Multimediasystems 2 mittels Sprache über ein Mikrofon 34 aktivierbar ist.

Zu den unabhängig von der Drucktaste 24 drückbaren Tasten gehören ferner eine Blättertaste 36, eine zweite Blättertaste 38 und eine Rückkehrtaste 40, auf die später bei der Beschreibung der Steuerung der Funktion der Set Top Box 10 mittels der Fernbedienung 6 näher eingegangen wird. Um die Drucktaste 24 von den restlichen Tasten 30 bis 40 unterscheiden zu können, können diese optional gegenüber der Drucktaste 24 in Hochglanz ausgeführt sein.

Ein die Fernbedienung 6 zu Steuerung der Funktion der Set Top Box 10 verwendender Benutzer kann einen Finger in eine beliebige der Mulden 26 legen. Unterhalb der Drucktaste 24 ist im Gehäuse 18 der Fernbedienung 6 eine nicht zu sehende Elektronik mit einem nicht gezeigten Positionssensor vorhanden, die erfasst, in welche der Mulden 26 der Finger des Benutzers gelegt ist und die mit einer nicht gezeigten Sendeschnittstelle ein entsprechendes Positionssignal 42 an die Set Top Box 10 sendet.

Die Set Top Box 10 erkennt dann anhand des Positionssignals 42 die Mulde 26, in der der Finger des Benutzers liegt, und kennzeichnet das dieser Mulde 26 zugeordnete Menüelement 16 mit einer Hervorhebung 44, die in Fig. 1 mit einer Schraffur angedeutet ist.

Bewegt der Benutzer seinen Finger und legt ihn in eine andere Mulde 26, übermittelt die Fernbedienung 6 die Bewegung des Fingers über die Sendeschnittstelle mit dem Positionssignal 42, so dass die Set Top Box 10 die Hervorhebung 44 entsprechend mitbewegen kann. Auf diese Weise kann der Benutzer stets sehen, in welcher der Mulden 26 sich sein Finger gerade befindet.

Befindet sich der Finger des Benutzers in einer Mulde 26, die einem Menüpunkt 16 zugeordnet ist, welchen der Benutzer zur Steuerung der Set Top Box 10 auswählen möchte, so drückt er die Drucktaste 24 um die Achse 20 herunter. Die nicht gezeigte Elektronik der Fernbedienung 6 erfasst diesen Druck und sendet ebenfalls über die Sendeschnittstelle ein entsprechendes Auslösesignal 46 an die Set Top Box 10, mit dem die Funktion aktiviert wird, die dem aktuell hervorgehobenen Menüpunkt 16 zugeordnet ist.

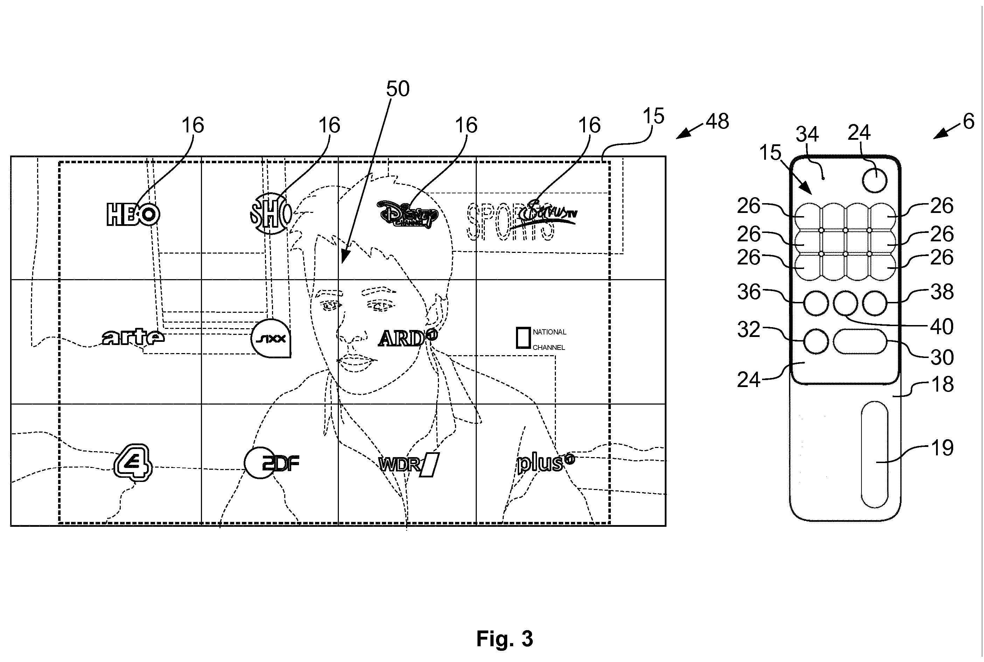

Diese Funktion kann beliebig sein und beispielsweise das Öffnen eines in Fig. 3 angedeuteten Untermenüs 48, das Aktivieren eines Programms oder das Starten einer Medienwiedergabe umfassen. Sollten mit dem Menü 14 mehr Funktionen bereitzustellen sein, als Menüpunkte 16 auf dem Bildschirm verfügbar sind, sollte also im vorliegenden Ausführungsbeispiel die Anzahl der zu steuernden Funktionen die Anzahl zwölf übersteigen, so kann mit den beiden Blättertasten 36, 38 in dem größeren Menü navigiert werden. Sollte sich der Benutzer im in Fig. 3 gezeigten Untermenü 48 befinden und möchte zum übergeordneten Menü 14 zurückkehren, kann er die Rückkehrtaste 40 betätigen.

Nachstehend soll das Verfahren zur Steuerung der Wiedergabeeinrichtung 4 mit der Fernbedienung 6 anhand der Fig. 2 bis 6 im Rahmen eines konkreten Beispiels erläutert werden. Hierzu sind in den Fig. 2 bis 6 beispielhafte Menüs 14, 48 gemeinsam mit einer Draufsicht der Fernbedienung 6 dargestellt, um die Abhängigkeiten der Raster 15 der Menüpunkte 16 auf dem Bildschirm 4 und der Mulden 26 auf der Fernbedienung 6 voneinander zu verdeutlichen. Diese Menüs 14, 48 sind in den Fig. 2 bis 6 einer aktuellen Medienwiedergabe, hier in Form eines Fernsehbildes 50 zu sehen überlagert.

Zunächst wird ein mögliches Menü 14 als Hauptmenü anhand von Fig. 2 näher beschrieben.

Das Menü 14 kann über seine einzelnen Menüpunkte 16 eine Vielzahl unterschiedlicher auswählbarer Funktionen bereitstellen, die in Fig. 2 der Übersichtlichkeit halber direkt beschriftet sind. Teile dieser Funktionen können selbst Untermenüs sein, wie beispielsweise der Menüpunkt 16 mit der Bezeichnung "*settings*", bei dem es sich um ein Untermenü handelt, in dem verschiedene Einstellmöglichkeiten für die Wiedergabeeinrichtung 4 auswählbar sind. Andere Funktionen wiederum können direkt ausführbare Programme sein, wie beispielsweise der Menüpunkt 16 mit der Bezeichnung "*weather*", mit dem der Benutzer über das Internet Wetterdaten abrufen kann.

Zur Auswahl eines Menüpunktes 16 legt der Benutzer seinen Finger auf eine Mulde 26, und die Set Top Box 10 kennzeichnet den dieser Mulde 26 zugeordneten Menüpunkt 16 in der zuvor beschriebenen Weise mit einer Hervorhebung 44. Die Hervorhebung 44 ist in Fig. 2 mit einer gestrichelten Umrandung angedeutet, während die Mulde 44, in die der Benutzer seinen Finger gelegt hat, mit einer Schraffur angedeutet ist. In der vorliegenden Ausführung nach Fig. 2 legt der Benutzer seinen Finger in die Mulde 26, die dem Menüpunkt 16 zugeordnet ist, der zu einem Untermenü 48 führt, welches eine Auswahl an verfügbaren Fernsehkanälen bietet.

Dieses Untermenü 48 ist in Fig. 3 in einem Zustand gezeigt, in dem der Benutzer die Drucktaste 24 der Fernbedienung 6 zunächst nicht berührt. Daher ist in Fig. 3 auch keine Hervorhebung 44 angedeutet oder gezeigt. Die auswählbaren Menüpunkte 16 sind hier jeweils media-as-a-service-Kanälen zugeordnet, die der Benutzer zu Wiedergabe auswählen kann. Hierbei handelt es sich um Multimediaangebote, die nicht lokal auf der Set Top Box 10 gespeichert, sondern über eine nicht gezeigte Empfangsschnittstelle der Set Top Box 10 empfangen und unmittelbar wiedergegeben werden. Derartige media-as-a-service-Kanäle sind beispielsweise Fernsehkanäle oder Streamingkanäle im Internet.

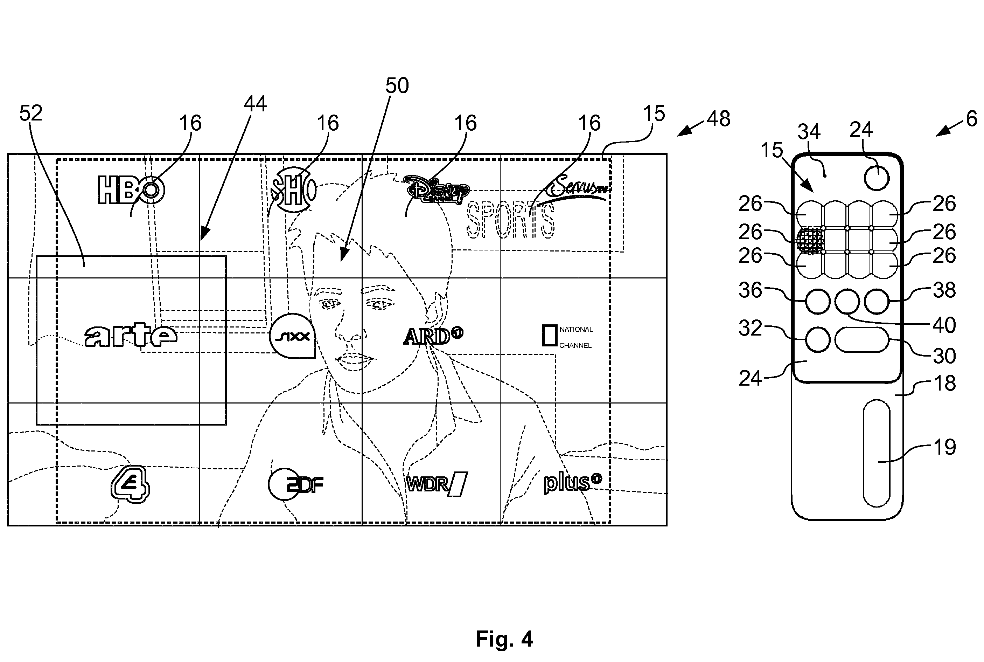

In Fig. 4 ist mit einer Schraffur angedeutet, wie der Benutzer seinen Finger in eine der Mulden 26 legt. Die Set Top Box 10 kennzeichnet den dieser Mulde 26 zugeordneten Menüpunkt 16 entsprechend mit einer Hervorhebung 44, die in Fig. 3 als Vergrößerung 52 des genannten Menüpunktes 16 ausgeführt ist, so dass der Benutzer den ausgewählten Menüpunkt noch klarer sehen kann. Sobald der Benutzer die Drucktaste 24 in der oben beschriebenen Weise niederdrückt wird das Untermenü 48 ausgeblendet und die Set Top Box 10 wechselt vom aktuellen Fernsehbild 50 zum mit dem Menüpunkt 16 ausgewählten media-as-a-service-Kanal. Durch die Rückkehrtaste 40 kann der Benutzer dann stets das Hauptmenü 14 aus Fig. 2 wieder einblenden und die Menüsteuerung von vorn beginnen.

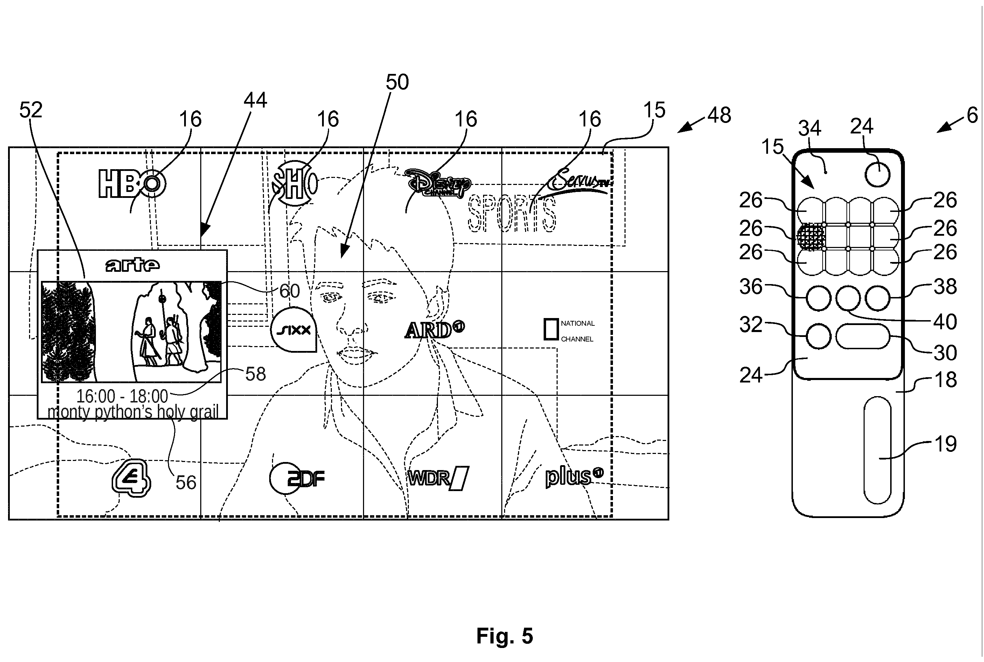

In Fig. 5, die grundsätzlich immer noch das Untermenü 48 der Fig. 3 und 4 zeigt, ist eine Weiterbildung der Hervorhebung 44 gezeigt. In der weitergebildeten Hervorhebung 44 werden zu der Funktion, die dem über die Mulden 26 ausgewählten Menüpunkt 16 zugeordnet ist, Hintergrundinformationen angezeigt.

In Fig. 5 enthalten diese Hintergrundinformationen den Namen 56 eines aktuell laufenden Films, der über den media-as-a-service-Kanal des hervorgehobenen Menüpunktes 16 verfügbar ist. Die Hintergrundinformationen enthalten ferner eine Zeitangabe 58, die den Zeitraum angibt in dem der Film ausgestrahlt wird, der über den zuvor genannten media-as-a-service-Kanal verfügbar ist. Schließlich enthalten die Hintergrundinformationen eine verkleinerte Medienwiedergabe 60 des zuvor genannten Filmes im Vordergrund, zusätzlich zu dem im Hintergrund laufenden Fernsehprogramm 50.

Durch die Hintergrundinformationen 56, 58, 60 kann der Benutzer bereits vor dem Drücken der Drucktaste 24 entscheiden, ob er den über den Menüpunkt 16 anwählbaren Medieninhalt auch tatsächlich sehen möchte.

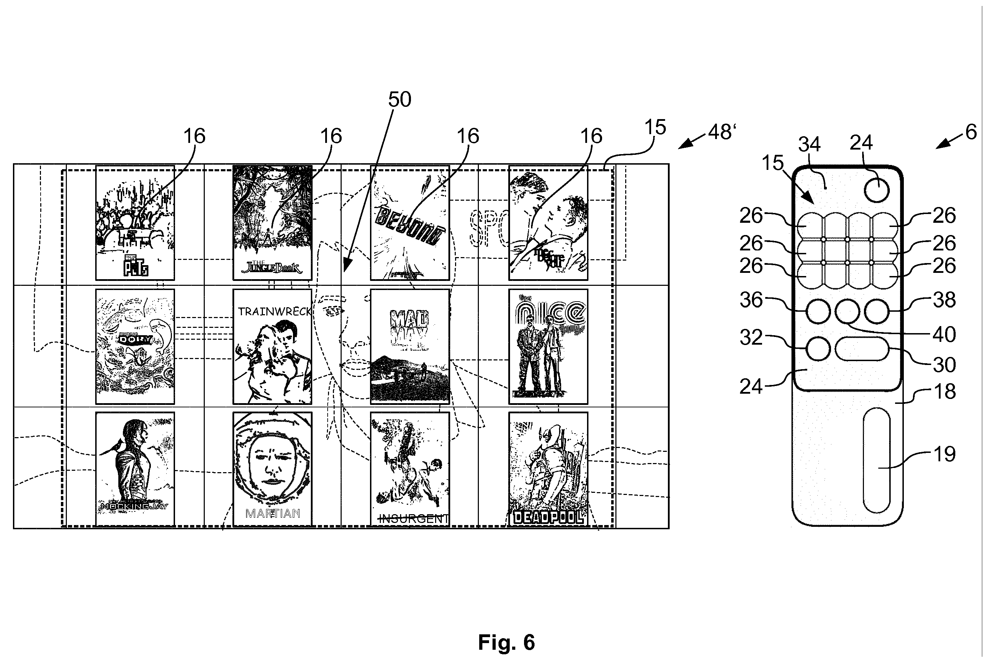

Ein alternatives Untermenü 48' ist in Fig. 6 gezeigt. Das Untermenü 48' gehört zum Menüpunkt 16 der Fig. 2 mit dem Namen "*movies*". Über die Menüpunkte können beispielsweise im Unterschied zu den media-as-a-service-Kanälen auf der Set Top Box 10 gespeicherte Medieninhalte wie Filme auswählbar sein.

Bei den beiden in Fig. 3 bis 6 erläuterten Untermenüs 48, 48' wird die Funktion der Blättertasten 36, 38 deutlich, denn in der Regel werden deutlich mehr Medien in den beiden Untermenüs 48, 48' verfügbar sein, als das Raster 15 auf einmal darstellen kann. In diesem Fall kann über die Blättertasten 36, 38 in einfacher Weise zwischen den Medieninhalten hin- und hergeblättert werden.

Die in den Fig. 2 bis 6 aufgezeigte Menüführung ist so einfach wie bei einem Smartphone. Anders als beim Smartphone braucht der Benutzer bei der Menüführung jedoch seine Finger nicht zu sehen. Er findet sich im Menü 14 rein über die Haptik der Drucktaste 24 und die Hervorhebung 16 zurecht, die angezeigt wird, wenn der Benutzer seinen Finger in eine der Mulden legt. Ein umständliches Navigieren mit einem Cursorelement zur Auswahl eines Menüpunktes ist nicht notwendig.

## Patentansprüche

1. Verfahren zum Steuern eines auf einem Bildschirm (8) angezeigten Menüs (14) mit einer Anzahl zu einem Raster (15) angeordneten Menüelementen (16) mit einer Eingabeschnittstelle (6), die eine Drucktaste (24) mit einer Anzahl zu dem Raster (15) angeordneten haptisch erfassbaren Segmenten (26) enthält, wobei die Drucktaste (24) um eine Achse (20) in und entgegen einer Drehrichtung (22) schwenkbar ist, und wobei die Anzahl der Menüelemente (16) der Anzahl der haptisch erfassbaren Segmente (26) entspricht, so dass jedem Menüelement (16) des Menüs (14) ein haptisch erfassbares Segment (26) auf der Drucktaste (24) zugeordnet ist, umfassend:
- Empfangen eines Positionssignals (42), das von der Position eines Fingers eines Benutzers auf der Drucktaste (24) abhängig ist und anzeigt, auf welche der haptisch erfassbaren Segmente (26) der Finger des Benutzers liegt,
- Hervorheben (44) des Menüelementes (16), das dem haptisch erfassbaren Segment (26) zugeordnet ist, welches sich an der Position des Fingers befindet, und
- Auslösen einer dem hervorgehobenen (44) Menüelement (16) zugeordneten Funktion, wenn die Drucktaste (24) betätigt (46) wird.

2. Verfahren nach Anspruch 1, wobei zum Hervorheben (44) des Menüelementes (16) das Menüelement (16) vergrößert (52) dargestellt wird.

3. Verfahren nach Anspruch 2, wobei in dem vergrößerten (52) Menüelement (16) Hintergrundinformation (56, 58, 60) zur dem Menüelement (16) zugeordneten Funktion angezeigt werden.

4. Verfahren nach Anspruch 3, wobei die dem hervorgehobenen (44) Menüelement (16) zugeordnete Funktion und die Hintergrundinformation (56, 58, 60) die Wiedergabe (60) eines vorbestimmten Medieninhalt umfasst.

5. Verfahren nach einem der vorstehenden Ansprüche, wobei die Eingabeschnittstelle (6) eine Fernbedienung (6) ist, und das Positionssignal (42) drahtlos von der Fernbedienung (6) empfangen wird.

6. Steuervorrichtung (10), die eingerichtet ist, ein Verfahren nach einem der vorstehenden Ansprüche durchzuführen.

7. Computerprogramm umfassend Programmcodemittel, um alle Schritte eines Verfahrens nach einem der Ansprüche 1 bis 7 durchzuführen, wenn das Computerprogramm auf der Steuervorrichtung (10) nach Anspruch 6 ausgeführt wird.

8. Wiedergabeeinrichtung (4) umfassend einen Bildschirm (8) zur Anzeige eines Menüs (14) aus einer Anzahl zu einem Raster (15) angeordneten Menüelementen (16) und eine Steuervorrichtung (10) nach Anspruch 6.

9. Fernbedienung (6) umfassend
- eine Drucktaste (24) mit einer Anzahl zu einem Raster (15) angeordneten haptisch erfassbaren Segmenten (26), wobei die Drucktaste (24) um eine Achse (20) in und entgegen einer Drehrichtung (22) schwenkbar ist, und
- einen Positionssensor zur Erfassung einer Position eines Fingers eines Benutzers auf dem Raster (15), und
- eine Sendeschnittstelle zum Versenden eines Positionssignals (42), das von der Position eines Fingers eines Benutzers auf der Drucktaste (24) abhängig ist sowie eines Auslösesignals (46), wenn die Drucktaste (24) durch den Benutzer gedrückt wird.

10. Multimediasystem (2) aus einer Wiedergabeeinrichtung (4) nach Anspruch 8 und einer Fernbedienung (6) nach Anspruch 9.

## Claims

1. Method for controlling a menu (14) displayed on a screen (8), having a number of menu items (16) arranged in a grid (15), by means of an input interface (6) which comprises a push-button (24) having a number of haptically detectable segments (26) arranged according to the grid (15), wherein the push-button (24) is pivotable about an axis (20) in a direction of rotation (22) and in the opposite direction, and wherein the number of menu items (16) corresponds to the number of haptically detectable segments (26), such that each menu item (16) of the menu (14) is assigned a haptically detectable segment (26) on the push-button (24), comprising:
- receiving a position signal (42) which is dependent on the position of a user's finger on the push-button (24) and indicates on which of the haptically detectable segments (26) the user's finger rests,
- highlighting (44) the menu item (16) which is assigned to the haptically detectable segment (26) located at the position of the finger, and
- triggering a function assigned to the highlighted (44) menu item (16) when the push-button (24) is actuated (46).

2. Method according to claim 1, wherein, for highlighting (44) the menu item (16), the menu item (16) is displayed enlarged (52).

3. Method according to claim 2, wherein background information (56, 58, 60) concerning the function assigned to the menu item (16) is displayed in the enlarged (52) menu item (16).

4. Method according to claim 3, wherein the function assigned to the highlighted (44) menu item (16) and the background information (56, 58, 60) comprise the playback (60) of predetermined media content.

5. Method according to any one of the preceding claims, wherein the input interface (6) is a remote control (6), and the position signal (42) is received wirelessly from the remote control (6).

6. Control device (10) configured to carry out a method according to any one of the preceding claims.

7. Computer program comprising program code means for carrying out all the steps of a method according to any one of claims 1 to 7 when the computer program is executed on the control device (10) according to claim 6.

8. Playback device (4) comprising a screen (8) for displaying a menu (14) formed by a number of menu items (16) arranged in a grid (15), and a control device (10) according to claim 6.

9. Remote control (6) comprising
- a push-button (24) having a number of haptically detectable segments (26) arranged in a grid (15), wherein the push-button (24) is pivotable about an axis (20) in a direction of rotation (22) and in the opposite direction, and
- a position sensor for detecting a position of a user's finger on the grid (15), and
- a transmission interface for transmitting a position signal (42) which is dependent on the position of a user's finger on the push-button (24), and a trigger signal (46) when the push-button (24) is pressed by the user.

10. Multimedia system (2) comprising a playback device (4) according to claim 8 and a remote control (6) according to claim 9.

## Revendications

1. Procédé de commande d'un menu (14) affiché sur un écran (8), comportant un certain nombre d'éléments de menu (16) agencés selon une grille (15), au moyen d'une interface d'entrée (6) qui comprend un bouton-poussoir (24) comportant un certain nombre de segments détectables au toucher (26) agencés selon la grille (15), le bouton-poussoir (24) pouvant pivoter autour d'un axe (20) dans un sens de rotation (22) et dans le sens opposé, et le nombre d'éléments de menu (16) correspondant au nombre de segments détectables au toucher (26), de sorte qu'à chaque élément de menu (16) du menu (14) est associé un segment détectable au toucher (26) sur le bouton-poussoir (24), comprenant :
- la réception d'un signal de position (42) qui dépend de la position d'un doigt d'un utilisateur sur le bouton-poussoir (24) et indique sur lequel des segments détectables au toucher (26) se trouve le doigt de l'utilisateur,
- la mise en surbrillance (44) de l'élément de menu (16) qui est associé au segment détectable au toucher (26) se trouvant à la position du doigt, et
- le déclenchement d'une fonction associée à l'élément de menu (16) mis en surbrillance (44), lorsque le bouton-poussoir (24) est actionné (46).

2. Procédé selon la revendication 1, dans lequel, pour la mise en surbrillance (44) de l'élément de menu (16), l'élément de menu (16) est affiché agrandi (52).

3. Procédé selon la revendication 2, dans lequel des informations d'arrière-plan (56, 58, 60) concernant la fonction associée à l'élément de menu (16) sont affichées dans l'élément de menu (16) agrandi (52).

4. Procédé selon la revendication 3, dans lequel la fonction associée à l'élément de menu (16) mis en surbrillance (44) et les informations d'arrière-plan (56, 58, 60) comprennent la reproduction (60) d'un contenu multimédia prédéterminé.

5. Procédé selon l'une des revendications précédentes, dans lequel l'interface d'entrée (6) est une télécommande (6), et le signal de position (42) est reçu sans fil en provenance de la télécommande (6).

6. Dispositif de commande (10) configuré pour mettre en œuvre un procédé selon l'une des revendications précédentes.

7. Programme informatique comprenant des moyens de code de programme permettant d'exécuter toutes les étapes d'un procédé selon l'une des revendications 1 à 7 lorsque le programme informatique est exécuté sur le dispositif de commande (10) selon la revendication 6.

8. Dispositif de reproduction (4) comprenant un écran (8) destiné à l'affichage d'un menu (14) formé d'un certain nombre d'éléments de menu (16) agencés selon une grille (15), et un dispositif de commande (10) selon la revendication 6.

9. Télécommande (6) comprenant
- un bouton-poussoir (24) comportant un certain nombre de segments détectables au toucher (26) agencés selon une grille (15), le bouton-poussoir (24) pouvant pivoter autour d'un axe (20) dans un sens de rotation (22) et dans le sens opposé, et
- un capteur de position destiné à détecter une position d'un doigt d'un utilisateur sur la grille (15), et
- une interface d'émission destinée à transmettre un signal de position (42) qui dépend de la position d'un doigt d'un utilisateur sur le bouton-poussoir (24), ainsi qu'un signal de déclenchement (46) lorsque le bouton-poussoir (24) est pressé par l'utilisateur.

10. Système multimédia (2) comprenant un dispositif de reproduction (4) selon la revendication 8 et une télécommande (6) selon la revendication 9.
